# FASCICULE DE BREVET EUROPEEN

(11) **EP 2 106 898 B1**
(45) Date de publication et mention de la délivrance du brevet: **02.09.2015**
(21) Numéro de dépôt: 09008200.9
(22) Date de dépôt: 17.07.2007
(51) Int. Cl.: B29C 33/04, B29C 33/00, B29C 49/48, F16L 37/56, B29C 49/42, B29C 47/92, B29C 33/26, B29C 35/16

(54) **Fiche pour le raccordement fluidique d'un moule de soufflage de récipients**
Stecker zum Anschluss von Fluiden an ein Blasformwerkzeug zum Herstellen von Behältern
Connector for connecting fluids to a blow moulding tool for producing containers

(30) Priorité: 21.07.2006 FR 0606642
(43) Date de publication de la demande: 07.10.2009
(62) Demande divisionnaire de: 07803876.7
(73) Titulaire: Sidel Participations, 76930 Octeville Sur Mer (FR)
(72) Inventeur: Dagorn, Daniel, 76930 Octeville-sur-Mer (FR)
(74) Mandataire: Louiset, Raphael

(56) Documents cités:
- DE-A1- 3 529 052
- DE-U1- 20 318 583
- FR-A- 2 423 437
- JP-A- 63 072 515
- US-A- 4 116 476
- US-A- 5 219 185
- "TEMPERIERMITTEL UND ELEKTRIK AUTOMATISCH KUPPELN" KUNSTSTOFFE, CARL HANSER VERLAG, MUNCHEN, DE, vol. 80, no. 7, juillet 1990 (1990-07), page 771, XP000159973 ISSN: 0023-5563

## Description

L'invention a trait à la fabrication des récipients par soufflage à partir d'ébauches, généralement en matière thermoplastique tel que PET.

Rappelons que le soufflage d'un récipient a lieu dans un moule dont la paroi définit une cavité au sein de laquelle est introduite l'ébauche, cette dernière venant, au cours du soufflage, épouser la paroi sous l'effet de la pression gazeuse élevée qui règne dans l'ébauche, laquelle est préalablement chauffée de manière à permettre sa déformation plastique.

Il est connu de munir le moule d'un système de régulation thermique. Selon les applications auxquelles sont destinés les récipients, soit on refroidit le moule afin de maintenir sa température au-dessous de la température de transition vitreuse (c'est notamment le cas dans la fabrication des récipients destinés à recevoir des eaux plates, le moule étant maintenu à une température comprise entre 20 et 65°C), soit on le chauffe à des températures supérieures à la température de transition vitreuse, afin de conférer au matériau une cristallinité suffisante pour le rendre résistant à la déformation lors d'un remplissage à chaud (récipient dit HR, de l'anglais *heat resistant*).

La régulation thermique est réalisée par circulation d'un fluide caloporteur (il s'agit généralement d'eau ou d'huile) dans au moins une canalisation formée dans la paroi du récipient. Selon que l'on souhaite réguler thermiquement le moule en totalité ou en partie, la canalisation peut s'étendre sur toute la hauteur du moule, ou être localisée dans une zone particulière (par exemple à proximité du col ou du fond du récipient).

La canalisation débouche généralement sur une face externe du moule et présente un orifice d'entrée, raccordé à un conduit d'amenée du fluide, et un orifice de sortie, raccordé à un conduit d'évacuation du fluide, dont la circulation est assurée par une pompe externe au moule. Lors des opérations de réglage, au cours desquelles on remplace les moules, les conduits doivent être débranchés du moule à démonter, puis être rebranchés sur le nouveau moule.

Les brevets américains US 6 444 159 et US 6 447 281 au nom de Sidel, Inc. illustrent cette technologie, laquelle donne satisfaction mais mérite, de l'avis des inventeurs, d'être perfectionnée car le branchement des conduits sur le moule s'avère assez malaisé.

L'article périodique Kunststoffe 80, Juillet 1990, n° 7, page 771, décrit une fiche pour le raccordement fluidique d'un moule de soufflage de récipients selon le préambule de la revendication 1.

Un but de l'invention est de faciliter le branchement et le débranchement des conduits d'amenée et d'évacuation du fluide caloporteur.

A cet effet, l'invention propose une fiche pour le raccordement fluidique d'un moule de soufflage de récipients, cette fiche se présentant sous forme d'un boîtier préhensible comprenant :
- des moyens d'accouplement fluidique prévus sur une face avant de la fiche, et
- un moyen d'accouplement mécanique, prévu sur la face avant de la fiche et distincts des moyens d'accouplement fluidique, le moyen d'accouplement mécanique étant constitué par un ensemble mâle/femelle positionné de manière centrale entre un conduit d'amenée d'un fluide caloporteur et un conduit d'évacuation du fluide caloporteur.

Le raccordement fluidique du moule peut ainsi être réalisé d'un seul geste, consistant à brancher la fiche sur le moule. Il en résulte une simplification des opérations et un gain de temps substantiel lors du réglage.

Les moyens d'accouplement fluidique comprennent des ouvertures formées dans la face avant de la fiche et où débouchent respectivement le conduit d'amenée d'un fluide caloporteur et le conduit d'évacuation du fluide caloporteur, les ouvertures étant munies chacune d'un système mobile d'obturation.

Le système d'obturation comprend par exemple une soupape munie d'une portée tronconique, montée coulissante sur une tige entre une position d'obturation, dans laquelle ladite portée est en appui contre un siège de soupape complémentaire formé dans le conduit, et une position d'ouverture dans laquelle la soupape est écartée du siège.

Un ressort de rappel peut être interposé entre la soupape et un voile.

Selon un mode de réalisation, les conduits présentent des sections principales sensiblement parallèles débouchant sur la face avant et, à l'opposé de la face avant, des sections secondaires qui prolongent les sections principales perpendiculairement à celles-ci.

Les moyens d'accouplement mécanique comprennent par exemple un trou muni de moyens mobiles de retenue, qui peuvent être portés par un bouton déplaçable perpendiculairement audit trou. Ce bouton présente par exemple un alésage sensiblement coaxial audit trou et qui se termine, du côté opposé à la face avant de la fiche, par un lamage.

La fiche est de préférence munie de moyens de raccordement électrique prévus sur la face avant de la fiche et qui se présentent par exemple sous forme d'une paire de connecteurs électriques.

D'autres objets et avantages de l'invention apparaîtront à la lumière de la description faite ci-après en référence aux dessins annexés dans lesquels :
- la figure 1 est une vue en perspective montrant un dispositif de fabrication de récipients, comportant un moule et une paire de fiches pour le branchement de conduits d'amenée et d'évacuation d'un fluide caloporteur ;

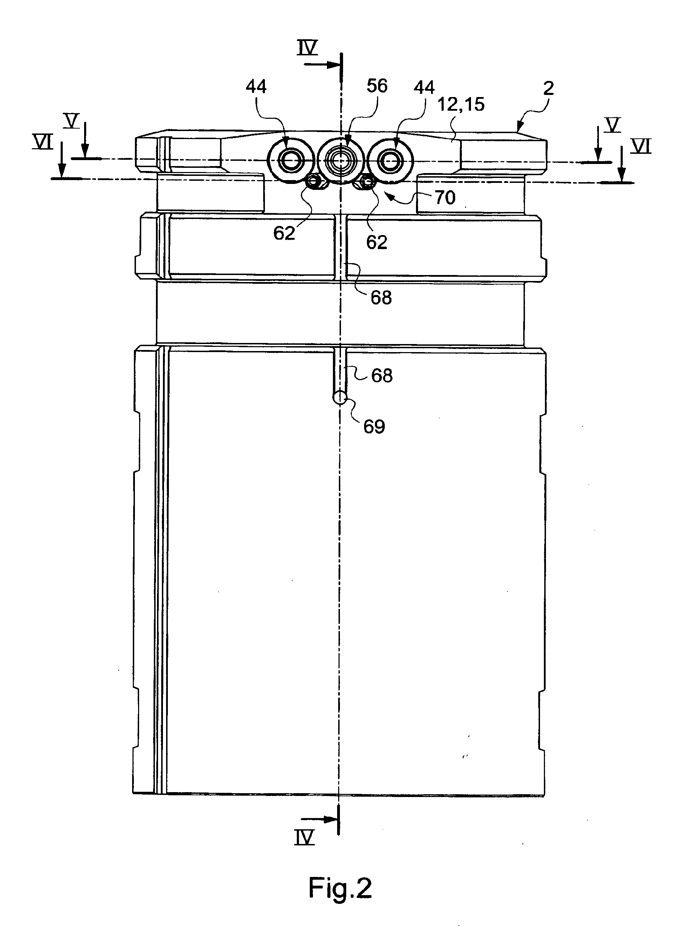

- la figure 2 est une vue d'élévation en plan du moule de la figure 1 ;
- la figure 3 est une vue d'un détail du moule de la figure 2 ;

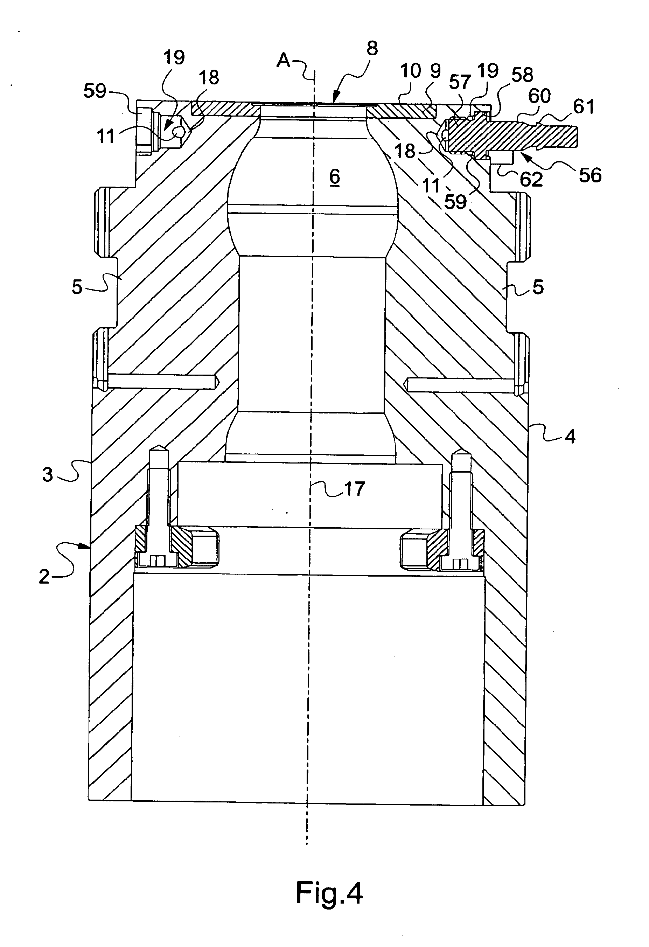

- la figure 4 est une vue en coupe du moule de la figure 2, suivant le plan de coupe IV-IV ;
- la figure 5 est une vue en coupe du moule de la figure 2, suivant le plan de coupe V-V ;
- la figure 6 est une vue en coupe du moule de la figure 2, suivant le plan de coupe VI-VI ;
- la figure 7 est une vue en perspective éclatée montrant une fiche et un système de fixation amovible de cette fiche sur le moule, dans une configuration dissociée ;

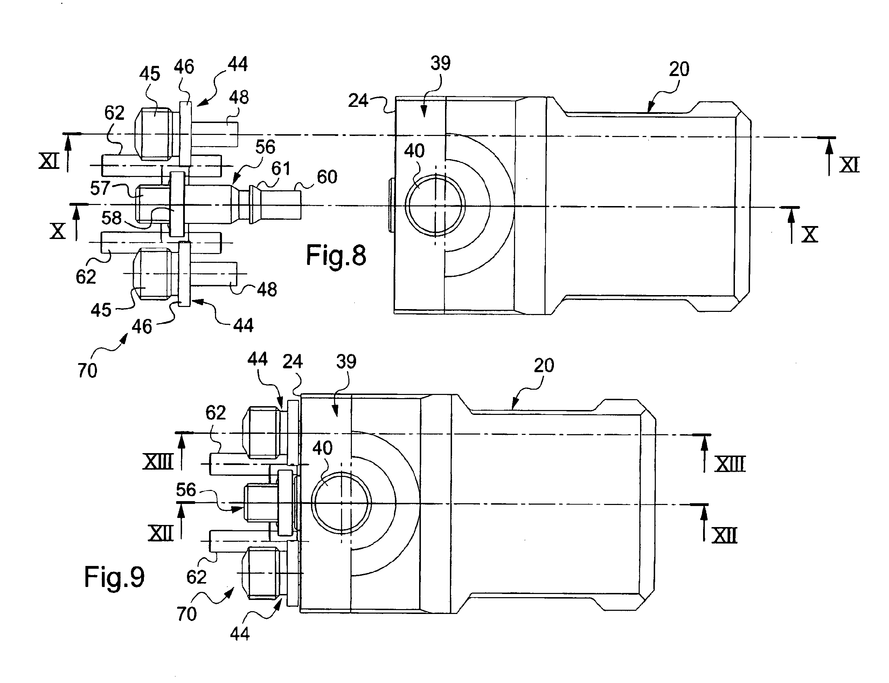

- la figure 8 est une vue de dessus de la fiche et du système de fixation de la figure 7 ;
- la figure 9 est une vue similaire à la figure 8, dans une configuration assemblée ;
- la figure 10 est une vue en coupe montrant la fiche et le système de fixation de la figure 8, suivant le plan de coupe X-X ;
- la figure 11 est une vue en coupe montrant la fiche et le système de fixation de la figure 8, suivant le plan de coupe XI-XI ;
- la figure 12 est une vue en coupe montrant la fiche et le système de fixation de la figure 9, suivant le plan de coupe XII-XII ;
- la figure 13 est une vue en coupe montrant la fiche et le système de fixation de la figure 9, suivant le plan de coupe XIII-XIII ;

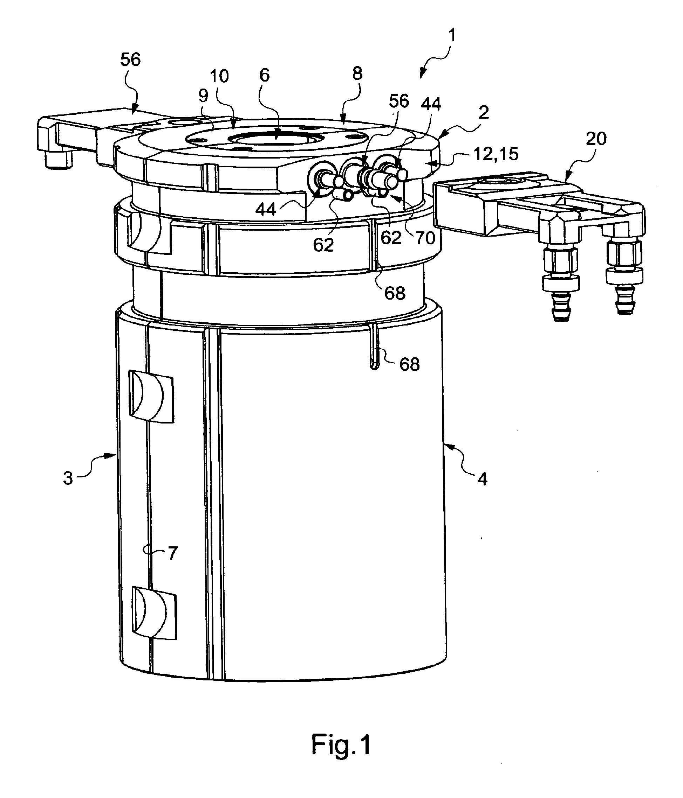

Sur la figure 1 est représenté un dispositif 1 de fabrication de récipients. Ce dispositif **1** comprend un moule **2** comportant deux demi-moules **3, 4** sensiblement symétriques réalisés dans un matériau métallique (généralement en acier ou dans un alliage d'aluminium) formant ensemble une paroi **5** globalement cylindrique de révolution autour d'un axe **A** principal et délimitant sur une face interne une cavité **6** destinée à conférer sa forme à un récipient réalisé par soufflage ou étirage soufflage, dans la cavité **6,** d'une ébauche en matière plastique préalablement chauffée à une température supérieure à sa température de transition vitreuse. Les demi-moules **3, 4** sont articulés le long d'une charnière **7** pour permettre l'ouverture du moule **2** en vue de l'introduction de l'ébauche. Un fond de moule (non représenté) vient s'intercaler entre les deux demi-moules **3, 4** pour former le fond du récipient.

La structure générale d'un tel moule **2,** dénommé « moule portefeuille », est décrite dans la demande de brevet français FR 2 856 333 et dans la demande internationale correspondante WO 05/002820, toutes deux au nom de la demanderesse, auxquelles l'homme du métier pourra se référer.

À une extrémité supérieure **8,** correspondant à un col du récipient à former, le moule **2** comprend une platine **9,** formée de deux parties symétriques montées chacune sur un demi-moule **3, 4,** platine **9** dont une face supérieure **10** forme une face d'appui pour une tuyère (non représentée) d'amenée d'air sous pression grâce auquel est réalisé le soufflage du récipient.

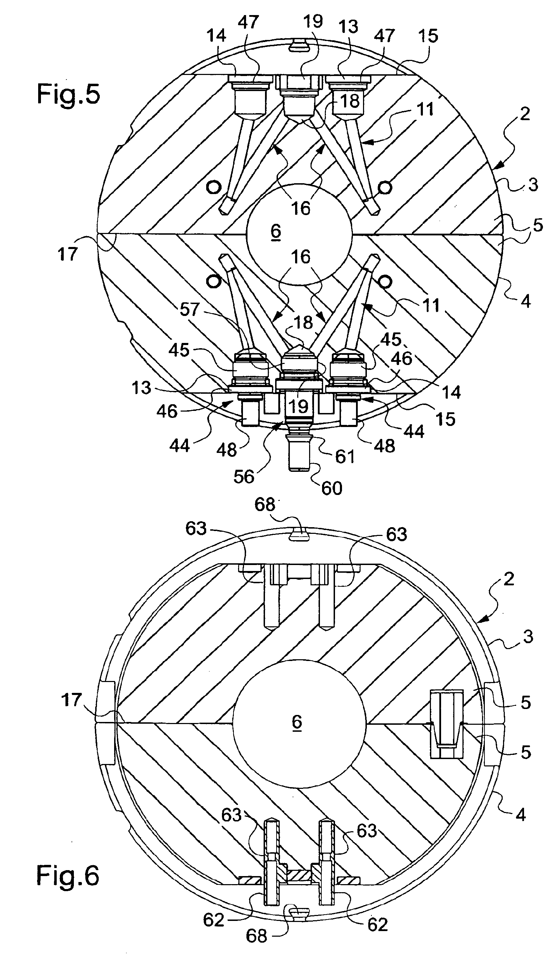

Comme illustré sur la figure 5, la paroi **5** du moule comprend, du côté de son extrémité supérieure **8,** deux canalisations **11,** chacune percée dans un demi-moule **3, 4,** pour permettre la circulation dans la paroi **5** d'un fluide caloporteur destiné à assurer le refroidissement (ou la chauffe) de la paroi **5.**

Chaque canalisation **11** débouche sur une face **12** externe du moule **2** en un orifice **13** d'entrée, par lequel est amené le fluide caloporteur, et en un orifice **14** de sortie, par lequel est évacué le fluide caloporteur après avoir effectué un échange thermique avec la paroi 5. Comme cela est représenté sur la figure 5, les orifices **13, 14** sont voisins, et sont formés chacun par un perçage réalisé dans la paroi **5** à partir d'un méplat **15** formé dans la face **12** externe du moule **2** parallèlement à l'axe **A** principal. Chaque canalisation **11** s'étend dans un plan transversal perpendiculaire à l'axe **A** principal, et présente une configuration en W comprenant deux sections **16** en V qui, partant chacune d'un orifice **13, 14,** s'étendent jusqu'à proximité d'un plan de joint **17** séparant les deux demi-moules **3, 4,** et se rejoignent dans une chambre **18** intermédiaire commune formée par une extrémité d'un perçage **19** central réalisé dans le méplat **15** entre l'orifice d'entrée **13** et l'orifice de sortie **14.**

Le dispositif 1 comprend en outre une fiche **20** se présentant sous la forme d'un boîtier dans lequel sont formés un conduit **21** d'amenée du fluide caloporteur, et un conduit **22** d'évacuation du fluide caloporteur. Les conduits **21, 22** présentent des sections principales **23** sensiblement parallèles, qui débouchent sur une face avant **24** de la fiche en deux ouvertures **25, 26** dont l'entraxe est égal à celui des orifices **13, 14.** Les conduits **21, 22** présentent, à l'opposé de la face avant **24,** des sections secondaires **27,** qui prolongent les sections principales **23** perpendiculairement à celles-ci et sont formées pour partie dans des embouts **28** sur lesquels sont montées des tubulures flexibles (non représentées), respectivement d'amenée et d'évacuation du fluide caloporteur.

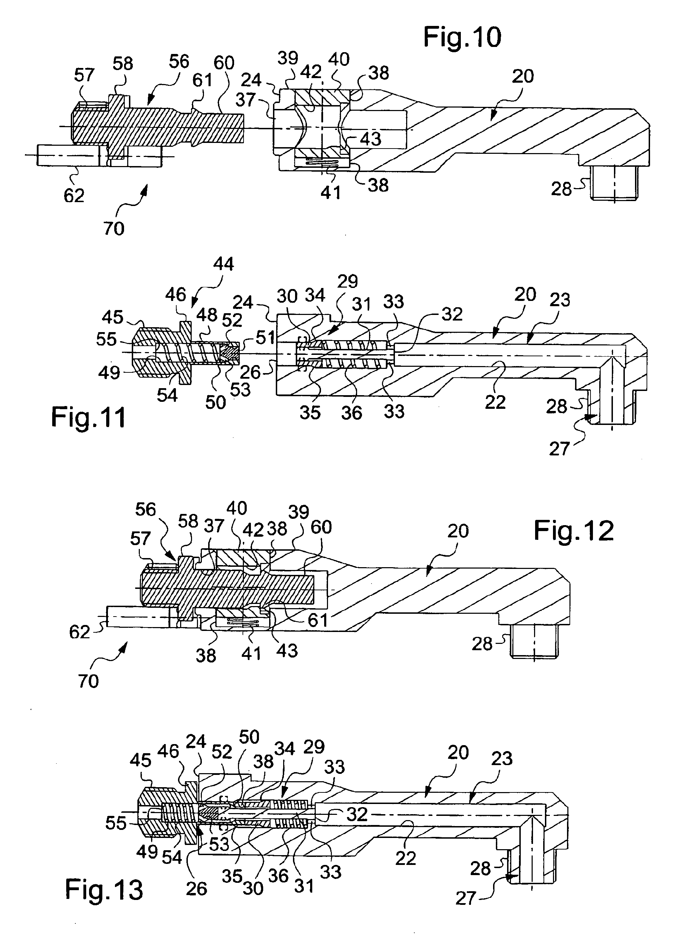

La fiche **20** comprend un système **29** d'obturation de chaque conduit **21, 22,** qui comprend une soupape **30** cylindrique montée sur une tige **31** qui s'étend coaxialement au conduit **21, 22,** à partir d'un voile **32** percé de trous **33,** en direction de l'ouverture **25, 26.** La soupape **30** présente une portée **34** tronconique apte à venir s'appliquer contre un siège **35** de soupape tronconique complémentaire, formé dans le conduit **21, 22.** La soupape **30** est montée coulissante sur la tige **31** entre une position d'obturation (figure 11), dans laquelle sa portée **34** est en appui contre le siège **35** de soupape, empêchant ainsi la circulation du fluide, et une position d'ouverture (figure 13) dans laquelle la soupape **30** est écartée du siège **35,** permettant ainsi la circulation du fluide. La soupape **30** est sollicitée en permanence par un ressort **36** de rappel interposé entre la soupape **30** et le voile **32.**

La fiche **20** présente, entre les ouvertures **25, 26,** un trou **37** central percé perpendiculairement à la face avant **24.** Un alésage **38** est percé dans la fiche **20** à partir d'une face **39** supérieure, perpendiculairement au trou **37** qu'il intersecte. Un bouton **40** est monté dans l'alésage **38** avec interposition, entre une extrémité interne du bouton **40** et un fond de l'alésage **38,** d'un ressort **41** de rappel fonctionnant en compression. Comme cela est visible sur la figure 10, le bouton **40** présente un alésage **42** sensiblement coaxial au trou **37** dont il assure la continuité, et qui se termine, du côté opposé à la face avant **24,** par un lamage **43.**

Chaque demi-moule **3, 4** est muni d'une paire d'embouts **44** d'accouplement fluidique, introduits chacun dans un orifice **13, 14** de la canalisation **11.** Chaque embout **44** comprend un corps **45** fileté par lequel il est vissé dans l'orifice **13, 14** correspondant, le corps **45** se prolongeant par une collerette **46** venant se loger dans un lamage **47** complémentaire formé autour de l'orifice **13, 14** pour assurer un positionnement correct de l'embout **44** en profondeur par rapport à la paroi **5,** puis par une chemise **48** cylindrique qui, une fois monté l'embout **44,** s'étend en saillie par rapport au méplat **15.** L'embout **44** est percé d'un alésage **49** traversant qui s'étend depuis une extrémité libre de la chemise **48** où il présente un épaulement **50** tronconique formant un siège de clapet, jusqu'à une extrémité opposée du corps **45** où l'alésage **49** débouche dans la canalisation **11.**

Un clapet **51,** présentant une portée **52** tronconique et percé de trous **53** obliques traversant débouchant sur la portée **52** et sur une face arrière du clapet **51,** est monté coulissant dans l'alésage **49,** entre une position d'obturation (figure 11) dans laquelle la portée **52** tronconique est appliquée contre le siège **50** de clapet, empêchant ainsi le passage du fluide caloporteur au travers de l'alésage **49,** et une position d'ouverture (figure 13) dans laquelle le clapet **51** est écarté du siège **50** pour permettre le passage du fluide caloporteur au travers de l'alésage **49.** Le clapet **51** est sollicité en permanence par un ressort **54** de rappel interposé entre le clapet **51** et un épaulement **55** formé dans l'alésage **49.**

Chaque demi-moule **3,** 4 est en outre pourvu d'un embout **56** d'accouplement mécanique, distinct des embouts **44** d'accouplement fluidique et muni d'une partie **57** filetée par laquelle il est vissé dans le perçage **19** central, cette partie **57** filetée se prolongeant par une collerette **58** venant se loger dans un lamage **59** complémentaire formé autour du perçage **19** pour assurer un positionnement correct de l'embout **56,** puis par un pion **60** sensiblement cylindrique muni sur son pourtour d'un bourrelet **61** annulaire.

À partir d'une configuration où le moule **2** et une fiche **20** sont initialement désaccouplés (tel qu'illustré dans la partie supérieure droite de la figure 1), on réalise leur accouplement par emboîtement de la fiche **20** sur les embouts **44, 56,** l'embout **56** d'accouplement mécanique venant s'emmancher dans le trou **37** central de la fiche **20** tandis que les embouts **44** d'accouplement fluidique viennent s'emmancher dans les ouvertures **25, 26,** jusqu'à réaliser l'encliquetage de la fiche **20** lorsque, le bourrelet **61** annulaire ayant dépassé le lamage **43** après avoir repoussé le bouton **40** à l'encontre de son ressort **41** de rappel par glissement contre un bossage réalisé dans l'alésage **42,** le bourrelet **61** vient en prise avec le lamage **43** sans possibilité de retrait, sauf à exercer une pression manuelle sur le bouton **40** à l'encontre de son ressort **41** de rappel.

Dans le même temps, le raccordement est réalisé simultanément et de manière étanche entre le conduit **21** d'amenée et l'orifice **13** d'entrée d'une part, et entre le conduit **22** d'évacuation et l'orifice **14** de sortie d'autre part. Comme cela est illustré sur la figure 13, la chemise **48** vient repousser la soupape **30** vers sa position d'ouverture à l'encontre de son ressort **36** de rappel, tandis que la tige **31** repousse le clapet **51** vers sa position d'ouverture à l'encontre de son ressort **54** de rappel. Dans cette configuration ouverte, le fluide peut librement circuler du conduit **21** d'amenée vers la canalisation **11** puis vers le conduit **22** d'évacuation en transitant par chaque alésage **49** et en passant au travers des trous **33,** 53.

Pour séparer la fiche **20** du moule **2,** sur lequel elle se trouve ainsi fixée de manière amovible, il suffit d'appuyer sur le bouton **40,** ce qui libère le bourrelet **61** de l'embout **56** d'accouplement mécanique, et de retirer la fiche **20** parallèlement à l'axe des conduits **21, 22.** Au cours du retrait, la soupape **30** et le clapet **51** retrouvent leur position initiale d'obturation, évitant ainsi toute fuite du fluide caloporteur.

Les dispositions qui viennent d'être décrites ont l'avantage de la simplicité, et permettent de réaliser le raccordement fluidique du moule en un seul geste, par lequel on vient simplement emboîter la fiche **20** sur les embouts **44, 56** pour la fixer ensuite de manière amovible par encliquetage sur l'embout **56.**

On comprend à la lecture de ce qui précède que les moyens d'accouplement fluidique et mécanique de la fiche **20** sur le moule **2** comprennent une partie mâle (formée des embouts **44, 56),** portée par le moule **2,** et une partie femelle complémentaire (formée des ouvertures **25, 26** et du trou **37** central) portée par la fiche **20.** Il est bien entendu possible d'inverser cette configuration, en munissant le moule **2** d'une partie femelle et la fiche **20** d'une partie mâle complémentaire.

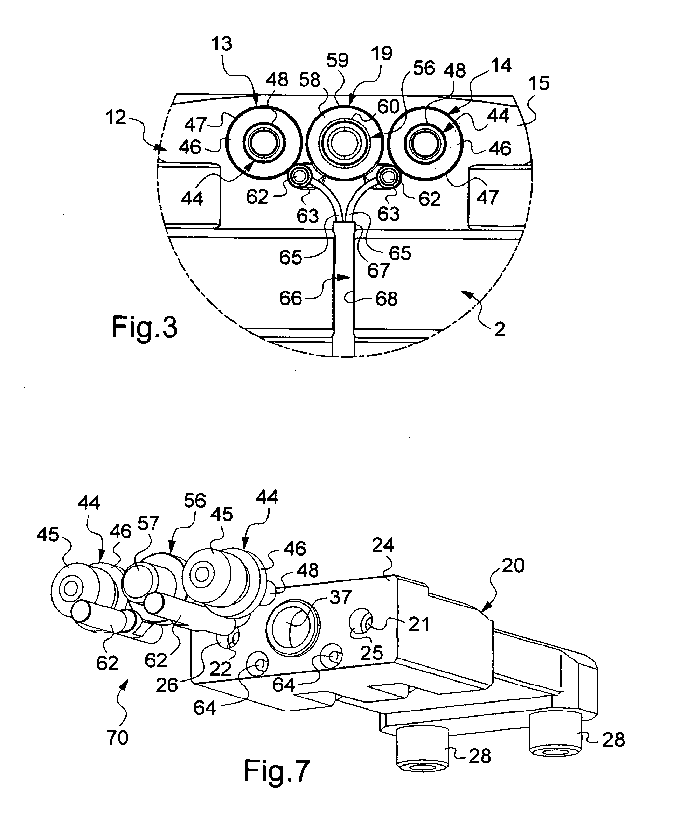

Suivant un mode particulier de réalisation, le moule **2** comprend une instrumentation, telle qu'une sonde de température, nécessitant une alimentation électrique. A cet effet, le moule **2** peut être équipé de bornes **62** électriques sous forme de manchons métalliques emmanchés dans deux perçages **63** réalisés dans chaque demi-moule **3, 4** au voisinage immédiat des embouts **44, 56,** comme cela est notamment illustré sur la figure 3. Comme l'alimentation fluidique, l'alimentation électrique du moule **2** est réalisée via la fiche **20,** laquelle est munie de connecteurs **64** électriques qui, lorsque la fiche **20** est accouplée au moule **2,** viennent s'emboîter dans les bornes **62.** Chaque connecteur **64** est relié à un câble électrique (non représenté) qui assure la liaison avec un générateur basse tension externe au dispositif 1. Sur les bornes **62** sont branchés deux conducteurs **65** formant ensemble un thermocouple **66** partiellement enveloppé d'une gaine **67** en silicone logée dans une rainure **68** à section trapézoïdale. Une extrémité (non visible) dénudée du thermocouple **66** forme une sonde enfilée dans un perçage **69** pratiqué dans la paroi **5** dont la sonde réalise une prise de température au voisinage de la cavité **6.**

Dans ce mode de réalisation, les embouts **44, 56** et les bornes **62** forment conjointement, dans une zone localisée du moule **2,** une prise **70** à trois fonctions : connexion mécanique, raccordement fluidique, raccordement électrique, sur laquelle on vient brancher la fiche **20.** Un seul geste, consistant à encliqueter la fiche **20** dont la compacité permet sa préhension dans une seule main, permet de réaliser simultanément ces trois fonctions.

## Revendications

1. Fiche (**20**) pour le raccordement fluidique d'un moule de soufflage de récipients, elle se présentant sous forme d'un boîtier préhensible comprenant :
- des moyens (**25**, **26**) d'accouplement fluidique prévus sur une face **avant (24) de la fiche (20**), **caractérisée en ce que** le boîtier comprend additionellement
- un moyen (**37**) d'accouplement mécanique, prévu sur la face avant (**24**) de la fiche (**20**) et distinct des moyens d'accouplement fluidique (**25**, **26**), le moyen d'accouplement mécanique étant constitué par un ensemble mâle/femelle positionné de manière centrale entre un conduit d'amenée (**21**) d'un fluide caloporteur et un conduit d'évacuation (22) du fluide caloporteur
les moyens d'accouplement fluidique comprenant des ouvertures (**25**, **26**), formées dans la face avant (**24**) de la fiche (**20**) et où débouchent respectivement le conduit (**21**) d'amenée d'un fluide caloporteur et le conduit (**22**) d'évacuation du fluide caloporteur, les ouvertures (**25**, **26**) étant munies chacune d'un système (**29**) mobile d'obturation.

2. Fiche (**20**) selon la revendication 1, dans laquelle le système (**29**) d'obturation comprend une soupape (**30**) cylindrique munie d'une portée (**34**) tronconique, montée coulissante sur une tige (31) entre une position d'obturation, dans laquelle ladite portée (**34**) est en appui contre un siège de soupape (**35**) tronconique complémentaire formé dans le conduit (**21**, **22**), et une position d'ouverture dans laquelle la soupape (**30**) est écartée du siège (**35**).

3. Fiche (**20**) selon la revendication 2, qui comprend un ressort de rappel interposé entre la soupape (**30**) et un voile (**32**).

4. Fiche (**20**) selon l'une des revendications 2 à 3, dans laquelle les conduits (**21**, **22**) présentent des sections principales (**23**) sensiblement parallèles débouchant sur la face avant (**24**) et, à l'opposé de la face avant (**24**), des sections secondaires (**27**) qui prolongent les sections principales (**23**) perpendiculairement à celles-ci.

5. Fiche (**20**) selon l'une des revendications 1 à 4, dans laquelle les moyens d'accouplement mécanique comprennent un trou (**37**) muni de moyens (**43**) mobiles de retenue.

6. Fiche (**20**) selon la revendication 5, dans lequel les moyens (**43**) mobiles de retenue sont portés par un bouton (**40**) déplaçable perpendiculairement audit trou (**37**).

7. Fiche (**20**) selon la revendication 6, dans lequel le bouton (**40**) présente un alésage (**42**) sensiblement coaxial audit trou (**37**) et qui se termine, du côté opposé à la face avant (**24**) de la fiche (**20**), par un lamage (**43**).

8. Fiche (**20**) selon l'une des revendications 1 à 7, munie de moyens (**64**) de raccordement électrique prévus sur la face avant (**24**) de la fiche (**20**).

9. Fiche selon la revendication 8, dans laquelle les moyens de raccordement électrique se présentent sous forme d'une paire de connecteurs (**64**) électriques.

## Patentansprüche

1. Stecker (20) für den Anschluss von Fluiden an ein Blasformwerkzeug zum Herstellen von Behältern, der in Form eines greifbaren Gehäuses dargestellt ist, umfassend:
- Mittel (25, 26) für den Fluidanschluss, die auf einer Vorderseite (24) des Steckers (20) vorgesehen sind,
**dadurch gekennzeichnet, dass** das Gehäuse zusätzlich umfasst:
- ein mechanisches Anschlussmittel (37), das auf der Vorderseite (24) des Steckers (20) vorgesehen und von den Fluidanschlussmitteln (25, 26) getrennt ist, wobei das mechanische Anschlussmittel von einer Einsteck-/Aufnahmeeinheit gebildet ist, die zentral zwischen einer Zuleitung (21) eines Wärmefluids und einer Ableitung (22) des Wärmefluids angeordnet ist,
wobei die Fluidanschlussmittel Öffnungen (25, 26) umfassen, die in der Vorderseite (24) des Steckers (20) angeordnet sind und in die die Zuleitung (21) eines Wärmefluids bzw. die Ableitung (22) des Wärmefluids mündet, wobei die Öffnungen (25, 26) jeweils mit einem beweglichen Verschlusssystem (29) versehen sind.

2. Stecker (20) nach Anspruch 1, bei dem das Verschlusssystem (29) ein zylindrisches Ventil (30) umfasst, das mit einem kegelstumpfartigen Umfangsbereich (34) versehen ist, das gleitend auf einer Stange (31) zwischen einer Verschlussposition, in der der Umfangsbereich (34) an einem komplementären kegelstumpfartigen Ventilsitz (35) anliegt, der in der Leitung (21, 22) ausgebildet, ist, und einer Öffnungsposition, in der das Ventil (30) vom Sitz (35) entfernt ist, montiert ist.

3. Stecker (20) nach Anspruch 2, der eine Rückstellfeder umfasst, die zwischen dem Ventil (30) und einer Scheibe (32) angeordnet ist.

4. Stecker (20) nach einem der Ansprüche 2 bis 3, bei dem die Leitungen (21, 22) im Wesentlichen parallele Hauptquerschnitte (23), die auf der Vorderseite (24) münden, und gegenüber der Vorderseite (24) Nebenquerschnitte (27) aufweisen, die die Hauptquerschnitte (23) senkrecht zu diesen verlängern.

5. Stecker (20) nach einem der Ansprüche 1 bis 4, bei dem die mechanischen Anschlussmittel ein Loch (37) umfassen, das mit beweglichen Haltemitteln (43) versehen ist.

6. Stecker (20) nach Anspruch 5, bei dem die beweglichen Haltemittel (43) von einem senkrecht zum Loch (37) verschiebbaren Knopf (40) getragen werden.

7. Stecker (20) nach Anspruch 6, bei dem der Knopf (40) eine im Wesentlichen zum Loch (37) koaxiale Bohrung (42) aufweist, die auf der der Vorderseite (24) des Steckers (20) gegenüberliegenden Seite mit einer Senkung (43) endet.

8. Stecker (20) nach einem der Ansprüche 1 bis 7, der mit elektrischen Anschlussmitteln (64) versehen ist, die auf der Vorderseite (24) des Steckers (20) vorgesehen sind.

9. Stecker nach Anspruch 8, bei dem die elektrischen Anschlussmittel in Form eines Paars von elektrischen Schaltern (64) vorhanden sind.

## Claims

1. Connector (20) for the fluidic connection of a mould for blow-moulding containers, taking the form of a grippable casing containing:
- fluidic coupling means (25, 26) provided on a front face (24) of the connector (20), **characterized in that** the casing also comprises
- a mechanical coupling means (37), provided on the front face (24) of the connector (20) and distinct from the fluidic coupling means (25, 26), the mechanical coupling means consisting of a male/female assembly positioned centrally between an inlet duct (21) for a heat transport fluid and an outlet duct (22) for the heat transport fluid
the fluidic coupling means comprising openings (25, 26) which are formed in the front face (24) of the connector (20) and at which open, respectively, the inlet duct (21) for a heat transport fluid and the outlet duct (22) for the heat transport fluid, the openings (25, 26) each being provided with a movable stopper system (29).

2. Connector (20) according to Claim 1, in which the stopper system (29) comprises a cylindrical valve (30) provided with a frustoconical bearing surface (34), mounted slidably on a rod (31) between a stoppering position, in which said bearing surface (34) bears against a complementary frustoconical valve seat (35) formed in the duct (21, 22) and an opening position in which the valve (30) is moved away from the seat (35).

3. Connector (20) according to Claim 2, which comprises a return spring interposed between the valve (30) and a web (32).

4. Connector (20) according to either of Claims 2 and 3, in which the ducts (21, 22) have essentially parallel principal sections (23) opening on the front face (24) and, opposite the front face (24), secondary sections (27) which extend the principal sections (23) perpendicular to the latter.

5. Connector (20) according to one of Claims 1 to 4, in which the mechanical coupling means comprise a hole (37) provided with movable retaining means (43).

6. Connector (20) according to Claim 5, in which the movable retaining means (43) are borne by a button (40) which can be displaced perpendicular to said hole (37).

7. Connector (20) according to Claim 6, in which the button (40) has a bore (42) which is essentially coaxial with said hole (37) and which terminates, on the side opposite the front face (24) of the connector (20), in an end facing (43).

8. Connector (20) according to one of Claims 1 to 7, provided with electrical connection means (64) provided on the front face (24) of the connector (20).

9. Connector according to Claim 8, in which the electrical connection means take the form of a pair of electrical connectors (64).
